# EUROPÄISCHE PATENTSCHRIFT

(11) **EP 0 752 227 B1**
(45) Veröffentlichungstag und Bekanntmachung des Hinweises auf die Patenterteilung: **27.06.2001**
(21) Anmeldenummer: 96105619.9
(22) Anmeldetag: 10.04.1996
(51) Int. Cl.: A47J 36/24, A47J 39/02

(54) **Gerät für die Wärmebehandlung von Nahrungsmitteln**
Device for the heat treatment of food products
Dispositif pour le traitement à chaud des aliments

(30) Priorität: 19.06.1995 DE 29509531 U
(43) Veröffentlichungstag der Anmeldung: 08.01.1997
(73) Patentinhaber: Bartscher GmbH, 33154 Salzkotten (DE)
(72) Erfinder: Bartscher, Hans, 59590 Geseke (DE)
(74) Vertreter: Thielking, Bodo, Dipl.-Ing.

(56) Entgegenhaltungen:
- WO-A-92/17102
- FR-A- 2 679 433

## Beschreibung

Die Erfindung betrifft einen Salamander nach dem Oberbegriff des Patentanspruchs 1.

Derartige Salamander (FR-A-2 679 433), die vor allem in Großküchen zum Warmhalten von Speisen benutzt werden, sind mit Infrarot- Heizelementen bestückt. Der Nachteil dieser Infrarot-Heizstäbe liegt vor allen Dingen darin, daß sie vergleichsweise träge reagieren und lange Aufheizzeiten benötigen. Dies führt dazu, daß in den Großküchen die Salamander unabhängig von dem tatsächlichen Bedarf praktisch während der gesamten Arbeitszeit eingeschaltet bleiben, damit sie für die Köche bei Bedarf stets sofort benutzbar sind. Mit dieser Benutzungsweise wird sehr viel Strom verschwendet.

Es ist auch bereits ein Kochgerät bekannt (WO-A-9217102), bei dem die Wärmequelle durch Halogenlampen gebildet wird, die in einem festen, vorgegebenen Abstand von den Speisenbehältern angeordnet sind. Derartige übliche Halogenlampen als Wärmeerzeugungsmittel sind anfällig und teuer. Außerdem sind derartige bekannte Kochgeräte in der Praxis deshalb nicht als Salamander einzusetzen, weil der Abstand der Wärmequelle nicht gegenüber der Speisenoberfläche veränderbar ist.

Ausgehend von diesem Stand der Technik liegt der Erfindung die Aufgabe zugrunde, einen Salamander der als bekannt vorausgesetzten Art zu schaffen, der die Nachteile bekannter Salamander vermeidet und unmittelbar nach dem Einschalten betriebsbereit ist.

Die Lösung dieser Aufgabe erfolgt dadurch, daß die Heizeinrichtung eine Halogenlicht-Heizeinrichtung ist, die von einem für Glaskeramik-Kochflächen vorgesehenen HiLight-Heizkörper gebildet ist.

Derartige Halogenlicht-Heizeinrichtungen in Form von HiLight-Heizkörpern, wie sie für Glaskeramik-Kochflächen verwendet werden, haben den Vorteil, daß Sie innerhalb kürzester Zeit ihre volle Leistung bereitstellen. Bei derartigen HiLight-Heizkörpern beträgt die sogenannte Aufglühzeit vom Kaltzustand aus nur ca. 3 Sekunden. Unter Aufglühzeit versteht man die Dauer vom Einschalten des HiLight- Heizkörpers bis zur deutlichen Sichtbarkeit des Glühbildes hinter der Glaskeramikscheibe.

Vom Warmzustand aus beträgt dabei die Aufglühzeit nur ca. 1 Sekunde.

Der erfindungsgemäße Salamander vermeidet die Nachteile der bekannten Geräte. Da er extrem flink reagiert, besteht für die Köche keine Veranlassung mehr, in stromverschwendender Weise den Salamander stets während der gesamten Betriebszeit eingeschaltet zu halten.

Darüber hinaus läßt sich die Leistung des Salamanders entsprechend den jeweiligen Bedürfnissen innerhalb kürzester Frist verändern und bei Bedarf auch auf feste vorgegebene Werte einregeln.

Bei einer bevorzugten Ausführungsform ist die Einschaltzeit der Halogenlicht-Heizeinrichtung wählbar. Dabei ist es besonders vorteilhaft, daß die Einschaltdauer mittels den unterschiedlichen Einschaltzeiten zugeordneter unterschiedlicher Tastschalter wählbar ist.

Nach Ablauf der gewählten Einschaltzeit wird der Strom abgeschaltet, so daß eine auch unbeabsichtigte Stromverschwendung ausgeschlossen wird. Sollte die Einschaltzeit zu kurz gewesen oder wegen anderer Tätigkeiten die warmgehaltene oder überbackene Speise bereits wieder abgekühlt sein, kann sofort und ohne Zeitverluste nachgeheizt werden.

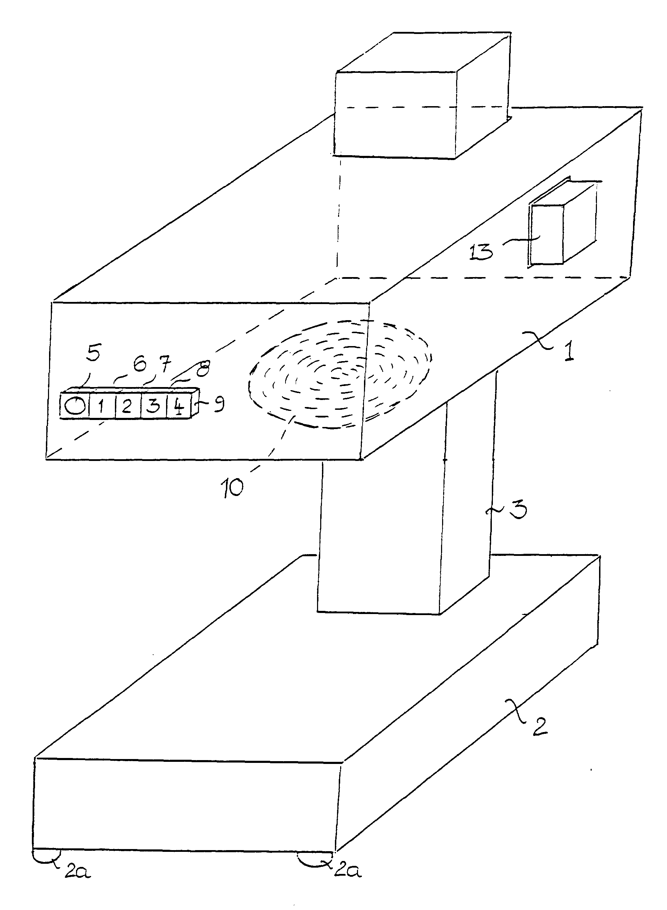

Nachstehend wird eine bevorzugte Ausführungsform der Erfindung anhand der Zeichnung beschrieben.

Die Zeichnung zeigt eine schematische Darstellung eines Salamanders mit einer lediglich schematisch angedeuteten Halogenlicht-Heizeinrichtung.

Ein Unterteil 2 steht mit Standfüßen 2a auf der Arbeitsfläche. Von dem Unterteil 2 ragt eine vertikale Säule 3 auf. Auf der vertikalen Säule 3 ist höhenverschieblich die Haube 1 geführt. Zum Verstellen der Haube 1 in der Höhe wird ein Betätigungsknopf 13 eingedrückt mit der Folge, daß die Haube 1 im gedrückten Zustand des Betätigungsknopfes 13 leicht auf der Säule 3 verschiebbar ist. In der gewünschten Höhe wird der gegen die Kraft einer nicht dargestellten Rückstellfeder betätigte Betätigungsknopf 13 losgelassen und mittels einer nicht dargestellten Klemmmechanik erfolgt dann eine Fixierung der Haube 1 an der Säule 3.

An der zum Unterteil 2 weisenden Seite der Haube 1 ist eine Halogenlicht-Heizeinrichtung 10 angeordnet, die nach unten von einer nicht dargestellten Glaskeramikplatte abgedeckt sein kann, wie sie aus Glaskeramik-Kochflächen bekannt ist.

Mit 5 ist eine Kontrollampe an der Frontseite bezeichnet, die den Betriebszustand des Salamanders anzeigt. Neben der Kontrollampe 5 sind vier Drucktasten 6, 7, 8 und 9 angeordnet. Die Drucktaste 6 steuert eine Einschaltzeit der Halogenlicht-Heizeinrichtung 10 von 1 Minute, die Drucktaste 7 von 2 Minuten, die Drucktaste 8 von 3 Minuten und die Drucktaste 9 von 4 Minuten.

Es können selbstverständlich auch mehr Betätigungseinrichtungen und andere als Drucktasten vorgesehen sein. Außerdem können den unterschiedlichen Betätigungseinrichtungen auch andere geeignete Betriebszeiten zugeordnet sein.

## Patentansprüche

1. Salamander mit einer höhenverstellbaren Haube (1), die eine Heizeinrichtung aufweist,
dadurch gekennzeichnet, daß die Heizeinrichtung eine Halogenlicht-Heizeinrichtung (10) ist, die von einem für Glaskeramik-Kochflächen vorgesehenen HiLight-Heizkörper gebildet ist.

2. Salamander nach Anspruch 1,
dadurch gekennzeichnet, daß die Leistung der Halogenlicht-Heizeinrichtung (10) einstellbar ist.

3. Salamander nach Anspruch 1 oder 2,
dadurch gekennzeichnet, daß die Leistung der Halogenlicht-Heizeinrichtung (10) regelbar ist.

4. Salamander nach einem oder mehreren der Ansprüche 1 bis 3,
dadurch gekennzeichnet, daß die Halogenlicht-Heizeinrichtung (10) eine die Halogenlicht-Heizeinrichtung nach unten abdeckende Glaskeramik-Abdeckung aufweist.

5. Salamander nach einem oder mehreren der Ansprüche 1 bis 4,
dadurch gekennzeichnet,
daß die Dauer vom Einschalten der Halogenlicht-Heizeinrichtung (10) bis zur deutlichen Sichtbarkeit des Glühbildes (= Aufglühzeit) vom Kaltzustand ca. 3 Sek. beträgt.

6. Salamander nach Anspruch 5,
dadurch gekennzeichnet, daß die Aufglühzeit vom Warmzustand ca. 1 Sek. beträgt.

7. Salamander nach einem oder mehreren der Ansprüche 1 bis 6,
dadurch gekennzeichnet, daß die Einschaltdauer der Halogenlicht-Heizeinrichtung (10) wählbar ist.

8. Salamander nach einem oder mehreren der Ansprüche 1 bis 7,
dadurch gekennzeichnet,
daß die Einschaltdauer mittels den unterschiedlichen Einschaltzeiten, insbesondere 1, 2, 3, 4 Min., zugeordneter unterschiedlicher Tastschalter (6; 7; 8; 9) wählbar ist.

## Claims

1. Salamander with a height adjustable hood (1) which has a heating device,
characterised in that
the heating device is a halogen light heating device (10) which is formed by a HiLight heating body for glass-ceramic cooking surfaces.

2. Salamander according to Claim 1,
characterised in that
the output of the halogen light heating device (10) is adjustable.

3. Salamander according to Claim 1 or 2,
characterised in that
the output of the halogen light heating device (10) is regulable.

4. Salamander according to one or more of Claims 1 to 3,
characterised in that
the halogen light heating device (10) has a glass-ceramic cover which covers the halogen light heating device from underneath.

5. Salamander according to one or more of Claims 1 to 4,
characterised in that
the time from switching on of the halogen light heating device (10) until clear visibility of the glow image (= warm up time) from cold amounts to about 3 seconds.

6. Salamander according to Claim 5,
characterised in that
the warm up time from the hot condition amounts to about 1 second.

7. Salamander according to one or more of Claims 1 to 6,
characterised in that
the switch on time of the halogen light heating device (10) is selectable.

8. Salamander according to one or more of Claims 1 to 7,
characterised in that
the switch on time is selectable by means of different push buttons (6; 7; 8; 9) associated with different switch on times, in particular 1, 2, 3, 4 min.

## Revendications

1. Salamandre avec élément supérieur (1) à hauteur réglable présentant un dispositif de chauffage,
caractérisée en ce que
le dispositif de chauffage est un système à halogène (10) formé par un corps de chauffe à lumière intense pour surface de cuisson en vitrocéramique.

2. Salamandre selon la revendication 1,
caractérisée en ce que
le rendement du dispositif de chauffage à halogène (10) peut être fixé par réglage.

3. Salamandre selon la revendication 1 ou 2,
caractérisé en ce que
le rendement du dispositif de chauffage à halogène (10) peut être régulé.

4. Salamandre selon l'une ou plusieurs des revendications 1 à 3,
caractérisée en ce que
le dispositif de chauffage à halogène est protégé, vers le bas, par une plaque en vitrocéramique.

5. Salamandre selon l'une ou plusieurs des revendications 1 à 4,
caractérisée en ce que
le temps de préchauffage de la mise en circuit du dispositif de chauffage à halogène (10) jusqu'au moment de l'apparition du symbole incandescent est de 3 secondes environ à partir de l'état froid.

6. Salamandre selon la revendication 5,
caractérisée en ce que
le temps de préchauffage est de 1 seconde environ à partir de l'état chaud.

7. Salamandre selon l'une ou plusieurs des revendications 1 à 6,
caractérisée en ce que
la durée de service du dispositif de chauffage à halogène (10) est sélectionnable.

8. Salamandre selon l'une ou plusieurs des revendications 1 à 7,
caractérisée en ce que
la duréee de service peut être sélectionnée à l'aide de touches de commutation (6; 7; 8; 9) qui sont affectées à différentes durées de service.
